# EUROPEAN PATENT SPECIFICATION

(11) **EP 1 367 310 B1**
(45) Date of publication and mention of the grant of the patent: **31.01.2007**
(21) Application number: 03012067.9
(22) Date of filing: 28.05.2003
(51) Int. Cl.: F16L 37/12

(54) **Pipe fitting**
Rohrverbindung
Raccord de tuyauterie

(30) Priority: 29.05.2002 JP 2002156381; 15.10.2002 JP 2002300761
(43) Date of publication of application: 03.12.2003
(73) Proprietor: Calsonic Kansei Corporation, Tokyo (JP)
(72) Inventor: Konno, Kenichi, c/o Ochiai Corporation, Tokyo (JP); Koyama, Sachio, c/o Calsonic Kansei Corporation, Tokyo (JP); Takasaki, Hiromi, c/o Calsonic Kansei Corporation, Tokyo (JP)
(74) Representative: Grünecker, Kinkeldey, Stockmair & Schwanhäusser Anwaltssozietät

(56) References cited:
- EP-A- 0 430 525
- DE-A- 3 146 888
- DE-C- 4 217 646
- DE-U- 8 613 607

## Description

The present invention relates to a pipe fitting that connects two pipes of different diameters, according to the preamble portion of the independent claims 1 and 7.

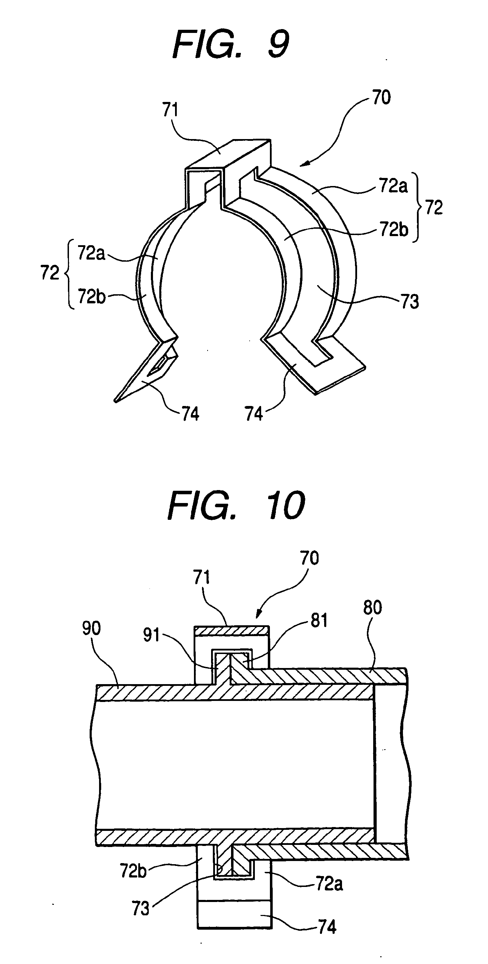

Conventionally, with respect to this type of pipe fitting 70, structures have been proposed in which, for example, as shown in Fig. 9, a rectangular spring portion 71 serves as a head portion, arced portions 72, in centers of which having punched rectangular opening portions 73, are connected to both sides of the spring portion 71, and guide portions 74, formed by folding lower ends of the arced portions 72 outward, are disposed. In order to use the pipe fitting 70 to connect two pipes of different diameters, the pipe fitting 70 is formed so that diameters of arc pieces 72a and 72b of the arced portions 72 differ at the left and right of the rectangular opening portions 73 and so that end portion shapes and disposed positions of the spring portion 71 and the guide portions 74 connected to the arced portions 72 also differ at the left and right of the rectangular opening portions 73 (e.g., see JP-A-2001-099376).

When two pipes are to be connected using the pipe fitting 70 of the above-described structure, as shown in Fig. 10, a large-diameter pipe 80 that includes a flange portion 81 and a small-diameter pipe 90 that includes a flange portion 91 are brought into contact, the portions at which the flanges contact are inserted through the pipe fitting 70 from the guide portions 74 so that the portions at which the flanges contact are fitted into the rectangular opening portions 73, the large-diameter arc pieces 72a of the arced portions 72 support the large-diameter pipe 80 and the small-diameter arc pieces 72b support the small-diameter pipe 90, whereby the state of contact is maintained.

However, because the pipe fitting 70 is formed so that the diameters of the arc pieces of the arced portions 72 differ at the left and right of the rectangular opening portions 73, the pipe fitting 70 becomes a twisted three-dimensional shape when it is integrally formed by pressing from a metal plate, and there has been the problem that sometimes each pipe cannot be reliably supported due to the arced portions 72 (the large-diameter arc pieces 72a and the small-diameter arc pieces 72b) bending.

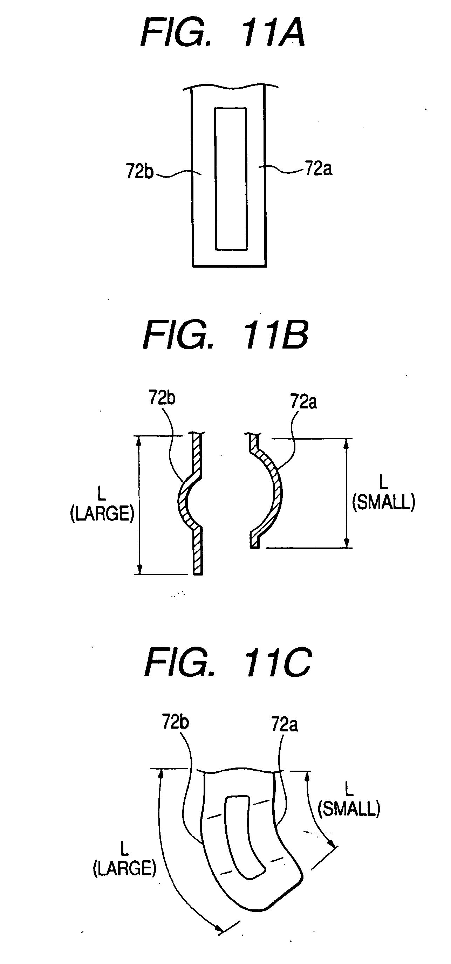

That is, when the arced portions 72 (the large-diameter arc pieces 72a and the small-diameter arc pieces 72b) are formed by pressing, although the developed lengths of the large-diameter arc pieces 72a and the small-diameter arc pieces 72b are the same prior to pressing (Fig. 11A), because the curvatures of the formed arcs are different, when they are bent at the same time, the length L of the large curvature becomes shorter (Fig. 11B) the entire portion is pulled toward the large-diameter piece 72a (toward the side at which L is small) (Fig. 11C) and, as a result, twisting is generated in the fixed fitting.

When the step between the diameters of the two pipes for which the fixed fitting 70 is used is small, large twisting is not generated in the arced portions 72. However, there has been the problem that twisting becomes remarkable when the step becomes larger, and the pipe fitting 70 no longer functions as a product.

From DE-U-8 613 607 a pipe fitting as indicted above is known. It is an objective of the present invention to improve a pipe fitting as indicated above.

The objective is solved according to the invention by a pipe fitting for connecting a large-diameter pipe and a small-diameter pipe each having a flange portion at the pipe end, comprising: a pair of side pieces disposed to face each other, and each having a fitting hole portion for receiving said flange portions when said large-diameter pipe and said small-diameter pipe are connected; a support portion adapted to support said small-diameter pipe, and being formed at each side piece in a manner to be orthogonal to said side pieces and to be facing each other, and a connecting piece connecting said side pieces at one end of each side piece and positioned in a plane in which said support portion is disposed, wherein said side pieces, said connecting piece and said support portion are integrally formed, wherein there are provided guide grooves being protruded outward and formed at an end portion of each side piece opposite to said end portion of said side pieces being connected to said connecting piece.

The objective is further solved according to the present invention by a pipe fitting for connecting a large-diameter pipe and a small-diameter pipe each having a flange portion at the pipe end, comprising: a pair of side pieces disposed to face each other, and each having a fitting hole portion for receiving said flange portions when said large-diameter pipe and said small-diameter pipe are connected; a support portion adapted to support said small-diameter pipe, and being formed at each side piece in a manner to be orthogonal to said side pieces and to be facing each other, and a connecting piece connecting said side pieces at one end of each side piece and positioned orthogonal to a plane in which said support portion is disposed, wherein said side pieces, said connecting piece and said support portion are integrally formed, wherein there are provided guide grooves being protruded outward and formed at an end portion of each side piece opposite to said end portion of said side pieces being connected to said connecting piece.

According to the invention, when the pipe fitting is fitted to a portion at which a large-diameter pipe and a small-diameter are connected, the pipe fitting has a spring action due to the side pieces and the connecting piece, the large-diameter pipe is supported by the pair of side pieces that are disposed so as to face each other, and the large-diameter pipe is supported by the side walls of the arced support portions that are disposed so that they are folded orthogonally to the side pieces. Thus, twisting does not arise in the integrally formed pipe fitting, and the pipe fitting can reliably support the pipes.

Hereinafter, the present invention is illustrated and explained by means of preferred embodiments in conjunction with the accompanying drawings, wherein:
Fig. 1 is a perspective explanatory drawing of a pipe fitting of an example of an embodiment of the invention;
Fig. 2 is a plan explanatory drawing showing a developed state, prior to pressing, of the pipe fitting;
Figs. 3A and 3B are drawings showing the pipe fitting, wherein Fig. 3A being a front explanatory drawing and Fig. 3B being a side explanatory drawing;
Fig. 4 is a connection side explanatory drawing showing a connected structure when the pipe fitting is fitted to a portion at which a large-diameter pipe and a small-diameter pipe are connected;
Fig. 5 is a perspective explanatory drawing of a pipe fitting showing another example of the embodiment of the invention;
Fig. 6 is a perspective explanatory drawing of a pipe fitting showing another example of the embodiment of the invention;
Figs. 7A and 7B are drawings showing another example of the pipe fitting, wherein Fig. 7A being a front explanatory drawing and Fig. 7B being a side explanatory drawing;
Figs. 8A and 8B are drawings showing another example of the pipe fitting, wherein Fig. 8A being a front explanatory drawing and Fig. 8B being a side explanatory drawing;
Fig. 9 is a perspective explanatory drawing of a conventional pipe fitting;
Fig. 10 is a connected structure cross-sectional explanatory drawing showing a connected structure when the pipe fitting of Fig. 9 is fitted to a portion at which a large-diameter pipe and a small-diameter pipe are connected; and
Figs. 11A, 11B and 11C are drawings showing arced portions for describing the reason twisting arises in the conventional pipe fitting, wherein Fig. 11A being a side explanatory drawing prior to pressing, Fig. 11B being a cross-sectional explanatory drawing of each arc piece after pressing, and Fig. 11C being a side explanatory drawing after pressing.

### DETAILED DESCRIPTION OF THE PREFERRED EMBODIMENTS

Referring now to the accompanying drawings, there is shown a preferred embodiment of the invention.

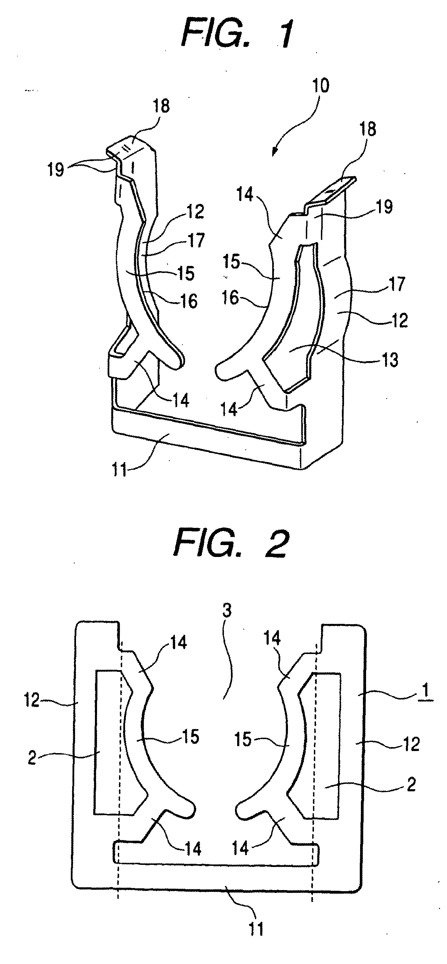

A pipe fitting as an example of an embodiment of the invention will be described with reference to Figs. 1 to 3B.

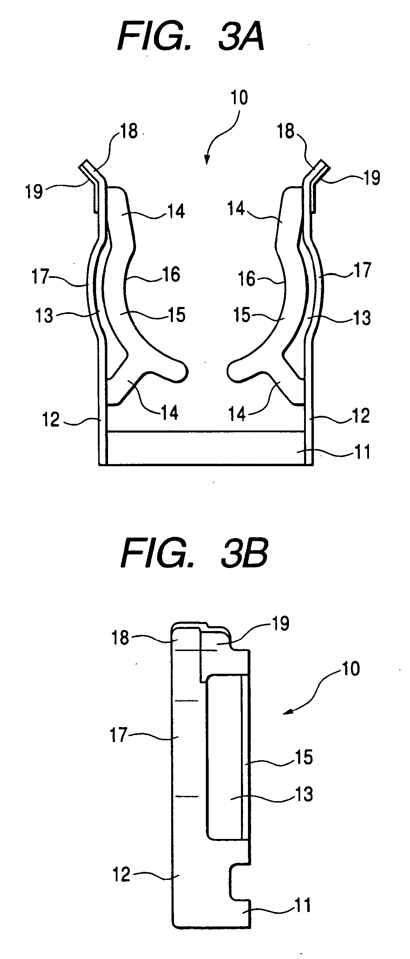

Fig. 1 is a perspective explanatory drawing of the pipe fitting, Fig. 2 is a plan explanatory drawing showing a developed state, prior to pressing, of the pipe fitting, and Figs. 3A and 3B are a front explanatory drawing and a side explanatory drawing of the pipe fitting.

As shown in Fig. 2, a pipe fitting 10 is integrally formed by pressing a substantially square metal plate 1, in which opening portions 2 and a cutout portion 3 are formed by punching. When the metal plate 1 of Fig. 2 is folded at the dotted line portions to form right angles and pressed to form uneven surfaces in side pieces 12, the metal plate 1 becomes the pipe fitting 10 having a three-dimensional shape such as the one shown in Fig. 1.

That is, the side pieces 12 are folded with respect to a connecting piece 11, which comprises a rectangular piece positioned at a front lower portion of the pipe fitting 10, so that the side pieces 12 are disposed facing each other at both sides of the connecting piece 11. The connecting piece 11 and the side pieces 12 are connected at end portions of the side pieces 12.

A fitting hole portion 13 (opening portions 2 in Fig. 2) is formed in each side piece 12, and arced support portions 15, which are disposed in a plane orthogonal to the side pieces 12 via foot pieces 14, are formed. That is, side wall portions 16 of the arced support portions 15 are disposed so as to face each other by folding the foot pieces 14 so that the foot pieces 14 are orthogonal to each side piece 12. Therefore, because each arced support portion 15 and the connecting piece 11 are folded and formed so that they are all orthogonal to the side pieces 12, they are disposed on the same plane.

When a large-diameter pipe and a small-diameter pipe are to be connected, the arced support portions 15 sandwich the small-diameter pipe from both sides with the side walls 16. Flange portions are insertable into the fitting hole portions 13 of the side pieces 12 in a state in which the large-diameter pipe and the small-diameter pipe are brought into contact and connected.

An arced curved portion 17, which is formed by pressing in a manner that an outer side thereof becomes convex, is disposed in a center portion of each side piece 12 along a position at which the fitting hole portion 13 is formed. When the pipes are connected, the curved portions 17 contact parts of the periphery of the large-diameter pipe and can support the large-diameter pipe.

Folded portions 18, which are folded so as to spread outward, are formed at end portions of the side pieces 12 opposite from the end portions of the side pieces 12 connected to the connecting piece 11. Moreover, guide grooves 19, which are protruded outward, are formed in the folded portions 18 and at positions to the sides of the fitting holes portions 13 in the side pieces 12 that are continuous with the folded portions 18.

Next, description will be given of a case where two pipes are connected using the pipe fitting 10 of the above-described structure.

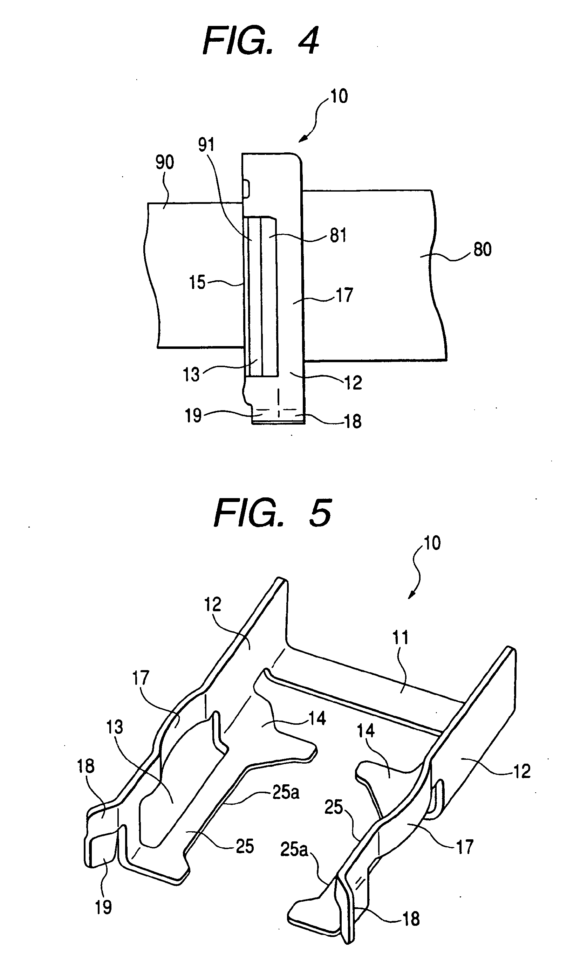

When a large-diameter pipe 80 and a small-diameter pipe 90 are to be connected, as shown in Fig. 4, a flange portion 81 of the large-diameter pipe 80 and a flange portion 91 of the small-diameter pipe 90 are brought into contact, and the portions at which the flange portions contact are inserted through the pipe fitting 10 from the folded portions 18 side. At this time, due to the disposure of the guide grooves 19, the flange portions can easily be inserted through the pipe fitting 10 and the portions at which the flange portions 81 and 91 contact are guided, whereby the flange portions 81 and 91 can be vertically inserted through the pipe fitting 10. Also, due to a spring action in which the connecting piece 11 serves as a base portion, both side pieces 12 widen, whereby the portions at which the flange portions contact are fitted and disposed in the fitting hole portions 13, the side walls 16 support the small-diameter pipe 90, and the curved portions 17 of the side pieces 17 support the large-diameter pipe 80, whereby the contact state is maintained.

Fig. 5 shows another embodiment of the invention, and the same reference numerals will be given to portions that have the same constitution as those in Fig. 1.

The pipe fitting 10 of Fig. 5 is one in which the shape of support portions 25 supporting the small-diameter pipe 90 are different in comparison to those of the pipe fitting 10 of Fig. 1. That is, whereas the arced support portions 15 along the shape of the small-diameter pipe 90 served as the support portions in the pipe fitting 10 of Fig. 1, the support portions 25, which sandwich the small-diameter pipe between straight portions 25a positioned to face each other, are formed. Other configurations are the same as those of the pipe fitting 10 of Fig. 1.

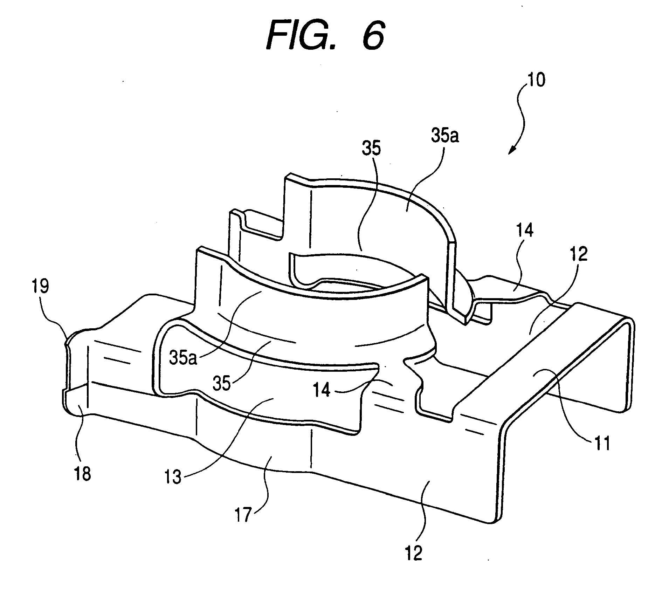

Fig. 6 shows another embodiment of the invention, and the same reference numerals will be given to portions that have the same constitution as those in Fig. 1.

The pipe fitting 10 of Fig. 6 is one in which the shape of support portions 35 supporting the small-diameter pipe 90 are different in comparison to those of the pipe fitting 10 of Fig. 1. That is, a vertical flange portion 35a, which is an arced curved surface vertically disposed across each entire arced support portion 15, is formed at the support side of each arced support portion 15 of the pipe fitting 10 shown in Fig. 1 so that the vertical flange portions 35a face each other and support the small-diameter pipe 90.

The small-diameter pipe 90 can be more reliably supported due to the support portions 35 that include the vertical flange portions 35a.

Other configurations are the same as those of the pipe fitting 10 of Fig. 1.

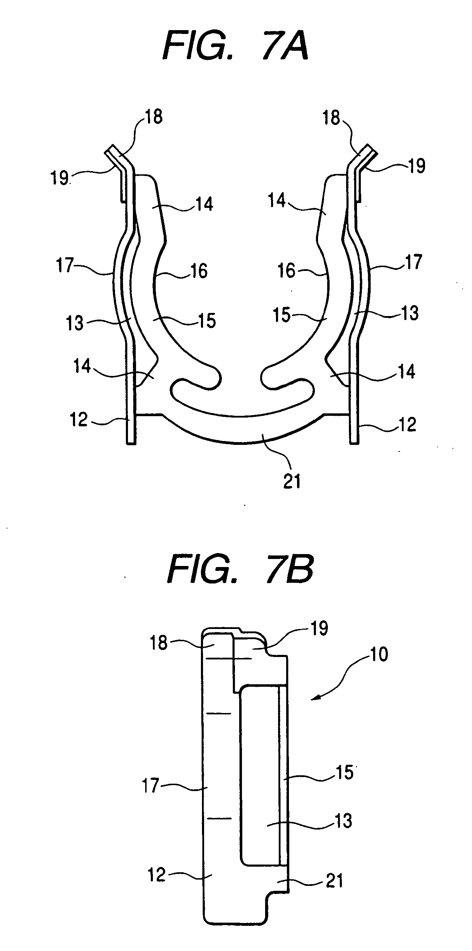

Figs. 7A and 7B show another embodiment of the invention, and the same reference numerals will be given to portions that have the same constitution as those in Fig. 1.

The pipe fitting 10 of Figs. 7A and 7B is one in which the shape and formation position of the connecting piece are different in comparison to those of the pipe fitting 10 of Fig. 3. That is, although the connecting piece 11 is disposed at the endmost portion in the same plane as the arced support portions 15 of the side pieces 15 in the pipe fitting 10 of Fig. 3, in this example, the connecting piece is configured by an arced piece 21 that connects positions slightly distanced from the end portions of the side pieces 12. The arced piece 21 is also connected to the foot portions 14.

Due to above described configuration, when the lengths of the side pieces 12 of the pipe fitting 10 in Figs. 3A, 3B, 7A and 7B are made the same, the distance from the folded portions 18 at the end portions of the side pieces to the spring fulcrum (arced piece 21) becomes shorter in the embodiment of Figs. 7A and 7B, and the spring constant when the side pieces 12 are spread becomes larger in comparison to the pipe fitting of Fig. 3 (i.e., the pipe fitting can be structured so that the side pieces 12 are difficult to spread).

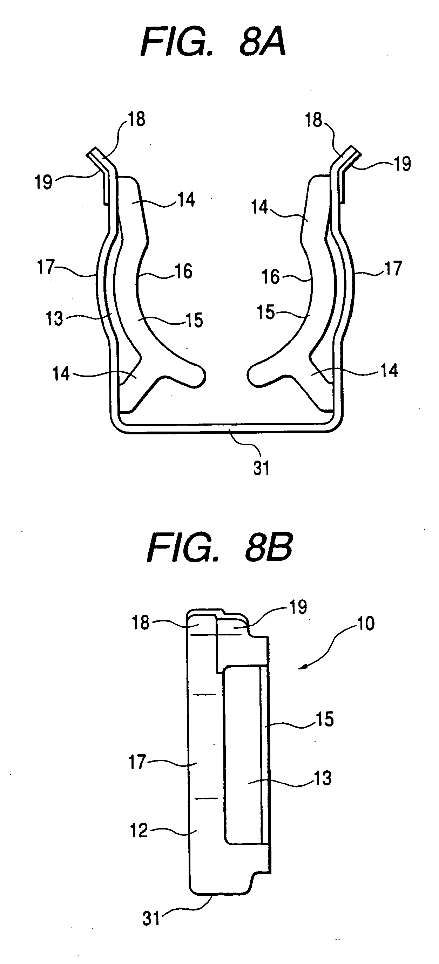

Figs. 8A and 8B show another embodiment of the invention, and the same reference numerals will be given to portions that have the same constitution as those in Fig. 1.

The pipe fitting 10 of Figs. 8A and 8B is one in which the position at which the connecting piece is formed with respect to the side pieces 12 is different in comparison to that of the pipe fitting 10 of Fig. 3. That is, in this example, a connecting piece 31 is configured to connect short ends (lower end edges) of the side pieces 12 and is disposed in a plane orthogonal to the arced support portions 15. That is, the connecting piece 31 connects the end portions of the side pieces 12 at a plane orthogonal to the arced support portions 15.

Due to above described configuration, when a force is applied in a direction in which the side pieces 12 are widened, because the force acts directly on both ends of the connecting piece 31 serving as the spring fulcrum, the spring constant is made smaller in comparison to the pipe fitting of Fig. 3 (i.e., the pipe fitting can be structured so that the side pieces 12 are easy to spread).

According to the pipe fitting 10 of each of the aforementioned embodiments, the pipe fitting has a spring action due to the side pieces 12 and the connecting pieces 11 and 31 (arced pieces 21), the large-diameter pipe 80 is supported by the pair of side pieces 12 that are disposed so as to face each other, and the large-diameter pipe 90 is supported by the side walls 16 (straight portions 25a and vertical flange portions 35a) of the arced support portions 15 (support portions 25 and support portions 35) that are disposed so that they are folded orthogonally to the side pieces 12. Thus, the connecting pieces 11 and 31 (arced pieces 21) can be disposed in a plane orthogonal to the side pieces 12. Thus, twisting does not arise in the overall shape of the pipe fitting 10, and the pipe fitting 10 can reliably support the pipes.

Additionally, according to the pipe fitting 10 of each of the aforementioned embodiments, even if the step between the diameters of the pipes that are to be connected is large, the pipes can be accommodated simply by deforming the shape of the arced support portions 15, and twisting does not arise in the pipe fitting 10 as in the conventional example.

Also, because the pipe fitting 10 can be integrally and easily formed by pressing the metal plate 1 to dispose the opening portions 2 and the cutout portions 3, it becomes possible to inexpensively manufacture the pipe fitting 10.

According to the invention, when the pipe fitting is fitted to a portion at which a large-diameter pipe and a small-diameter are connected, the pipe fitting has a spring action due to the side pieces and the connecting piece, the large-diameter pipe is supported by the pair of side pieces that are disposed so as to face each other, and the large-diameter pipe is supported by the side walls of the arced support portions that are disposed so that they are folded orthogonally to the side pieces. Thus, twisting does not arise in the integrally formed pipe fitting, and the pipe fitting can reliably support the pipes.

Also, a pipe fitting that is easily molded when being integrally formed by pressing can be provided.

Although the present invention has been shown and described with reference to specific preferred embodiments, various changes and modifications will be apparent to those skilled in the art from the teachings herein. Such changes and modifications as are obvious are deemed to come within the scope of the invention as defined in the appended claims.

## Claims

1. A pipe fitting (10) for connecting a large-diameter pipe (80) and a small-diameter pipe (90) each having a flange portion (81,91) at the pipe end, comprising:
- a pair of side pieces (12) disposed to face each other, and each having a fitting hole portion (13) for receiving said flange portions (81,91) when said large-diameter pipe (80) and said small-diameter pipe (90) are connected;
- a support portion (15,25,35) adapted to support said small-diameter pipe (90), and being formed at each side piece (12) in a manner to be orthogonal to said side pieces (12) and to be facing each other, and
- a connecting piece (11,21) connecting said side pieces (12) at one end of each side piece (12) and positioned in a plane in which said support portion (15,25,35) is disposed, wherein said side pieces (12), said connecting piece (11,21) and said support portion (15,25,35) are integrally formed,
**characterized by**
guide grooves (19) being protruded outward and formed at an end portion of each side piece (12) opposite to said end portion of said side pieces (12) being connected to said connecting piece (11,21).

2. A pipe fitting according to claim 1, **characterized in that** the support portions (15,25,35) are arced along a circumference of the small-diameter pipe (90).

3. A pipe fitting according to claim 1,**characterized in that** the connecting piece (11) is formed in a rectangular shape that connects the end portions of the side pieces (12).

4. A pipe fitting according to claim 1, **characterized in that** the connecting piece (21) is formed in an arced shape that connects positions slightly distanced from the end portions of the side pieces (12).

5. A pipe fitting according to claim 1, **characterized by** a curved portion (17) formed in a center portion of each side pieces (12) and adapted to be in contact with a circumference of the large-diameter pipe (80).

6. A pipe fitting according to claim 1, **characterized by** a folded portion (18) formed at an end portion of each side pieces (12) opposite to the end portion of said side pieces (12) being connected to said connecting pieces (11,21), and protrudes outward.

7. A pipe fitting (10) for connecting a large-diameter pipe (80) and a small-diameter pipe (90) each having a flange portion (81,91) at the pipe end, comprising:
a pair of side pieces (12) disposed to face each other, and each having a fitting hole portion (13) for receiving said flange portions (81,91) when said large-diameter pipe (80) and said small-diameter pipe (90) are connected;
a support portion (15,25,35) adapted to support said small-diameter pipe (90), and being formed at each side piece (12) in a manner to be orthogonal to said side pieces (12) and to be facing each other, and
a connecting piece (31) connecting said side pieces (12) at one end of each side piece (12) and positioned orthogonal to a plane in which said support portion (15,25,35) is disposed, wherein said side pieces (12), said connecting piece (31) and said support portion (15,25,35) are integrally formed,
**characterized by**
guide grooves (19) being protruded outward and formed at an end portion of each side piece (12) opposite to said end portion of said side pieces (12) being connected to said connecting piece (31).

8. A pipe fitting according to claim 7, **characterized in that** the support portions (15) are arced along a circumference of the small-diameter pipe (90).

9. A pipe fitting according to claim 7, **characterized by** a curved portion (17) formed in a center portion of each side pieces (12) and adapted to be in contact with a circumference of the large-diameter pipe (80).

10. A pipe fitting according to claim 7, **characterized by** a folded portion (18) formed at an end portion of each side pieces (12) opposite to the end portion of said side pieces (12) being connected to said connecting piece (31), and protrudes outward.

## Patentansprüche

1. Eine Rohrverbindung (10) zur Verbindung eines Rohres (80) mit einem großen Durchmesser und eines Rohres (90) mit einem kleinen Durchmesser, wobei jedes einen Flanschteil (81, 91) an dem Rohrende hat und umfasst:
- ein Paar Seitenteile (12), die einander gegenüberliegend angeordnet sind, wobei jedes einen Verbindungshohlraumteilbereich (13) zur Aufnahme der Flanschteile (81, 91) hat, wenn das Rohr (80) mit großem Durchmesser und das Rohr (90) mit kleinem Durchmesser verbunden sind;
- ein Halterungsteil (15, 25, 35), das geeignet ist, das Rohr (90) mit dem kleinen Durchmesser zu halten, und an jedem Seitenteil (12) in der Art angeformt ist, dass es orthogonal zu den Seitenteilen (12) ist und einander gegenüber liegen, und
- ein Verbindungsteil (11, 21), das die Seitenteile (12) an einem Ende eines jeden Seitenteils (12) verbindet und in einer Ebene positioniert ist, in welcher das Halterungsteil (15, 25, 35) angeordnet ist, wobei die Seitenteile (12), das Verbindungsteil (11, 21) und das Halterungsteil (15, 25, 35) zusammen geformt sind,
**dadurch gekennzeichnet,**
**dass** Führungskehlen (19) nach außen herausragen und an einem Endbereich jedes Seitenteils (12) gegenüber dem Endbereich der Seitenteile (12) geformt und mit dem Verbindungsteil (11, 21) verbunden sind.

2. Eine Rohrverbindung gemäß Anspruch 1, **dadurch gekennzeichnet, dass** die Halterungsteile (15, 25, 35) entlang eines Umfangs des Rohrs (90) mit kleinem Durchmesser gewölbt sind.

3. Eine Rohrverbindung gemäß Anspruch 1, **dadurch gekennzeichnet, dass** das Verbindungsteil (11) in einer rechtwinkligen Form gestaltet ist, und die Endbereiche der Seitenteile (12) verbindet.

4. Eine Rohrverbindung gemäß Anspruch 1, **dadurch gekennzeichnet, dass** das Verbindungsteil (21) in einer gewölbten Form gestaltet ist, und die Positionen verbindet, die leicht von den Endbereichen der Seitenteile (12) beabstandet sind.

5. Eine Rohrverbindung gemäß Anspruch 1, **dadurch gekennzeichnet, dass** ein gerundeter Bereich (17) in einem mittleren Bereich jedes Seitenteils (12) geformt ist und dazu geeignet ist, mit einem Umfang des Rohrs (80) mit großem Durchmesser in Kontakt zu sein.

6. Eine Rohrverbindung gemäß Anspruch 1, **dadurch gekennzeichnet, dass** ein gekanteter Bereich (18) an einem Endbereich jedes Seitenteils (12) gegenüber des Endbereichs der Seitenteile (12) geformt ist und mit den Verbindungsteilen (11, 21) verbunden ist und nach außen herausragt.

7. Eine Rohrverbindung (10) zur Verbindung eines Rohres (80) mit einem großen Durchmesser und eines Rohres (90) mit einem kleinen Durchmesser, wobei jedes einen Flanschteil (81, 91) an dem Rohrende hat und umfasst:
ein Paar Seitenteile (12), die einander gegenüberliegend angeordnet sind, wobei jedes einen Verbindungshohlraumteilbereich (13) zur Aufnahme der Flanschteile (81, 91) hat, wenn das Rohr (80) mit großem Durchmesser und das Rohr (90) mit kleinem Durchmesser verbunden sind;
ein Halterungsteil (15, 25, 35), das geeignet ist, das Rohr (90) mit dem kleinen Durchmesser zu halten, und an jedem Seitenteil (12) in der Art angeformt ist, dass es orthogonal zu den Seitenteilen (12) ist und einander gegenüber liegen, und
ein Verbindungsteil (31), das die Seitenteile (12) an einem Ende eines jeden Seitenteils (12) verbindet und orthogonal zu einer Ebene positioniert ist, in welcher das Halterungsteil (15, 25, 35) angeordnet ist, wobei die Seitenteile (12), das Verbindungsteil (31) und das Halterungsteil (15, 25, 35) zusammen geformt sind, **dadurch gekennzeichnet, dass** Führungskehlen (19) nach außen herausragen und an einem Endbereich jedes Seitenteils (12) gegenüber dem Endbereich der Seitenteile (12) geformt und mit dem Verbindungsteil (31) verbunden sind.

8. Eine Rohrverbindung gemäß Anspruch 7, **dadurch gekennzeichnet, dass** die Halterungsteile (15) entlang eines Umfangs des Rohrs (90) mit kleinem Durchmesser gewölbt sind.

9. Eine Rohrverbindung gemäß Anspruch 7, **dadurch gekennzeichnet, dass** ein gerundeter Bereich (17) in einem mittleren Bereich jedes Seitenteils (12) geformt ist und dazu geeignet ist, mit einem Umfang des Rohrs (80) mit großem Durchmesser in Kontakt zu sein.

10. Eine Rohrverbindung gemäß Anspruch 7, **dadurch gekennzeichnet, dass** ein gekanteter Bereich (18) an einem Endbereich jedes Seitenteils (12) gegenüber des Endbereichs der Seitenteile (12) geformt ist und mit dem Verbindungsteil (31) verbunden ist und nach außen herausragt.

## Revendications

1. Raccord de tuyauterie (10) pour connecter un tuyau de grand diamètre (80) et un tuyau de petit diamètre (90) ayant chacun une partie de bride (81, 91) à l'extrémité du tuyau, comprenant :
- une paire de pièces latérales (12) disposées pour être en face l'une de l'autre et ayant chacune une partie de trou de raccord (13) pour recevoir lesdites parties de bride (81, 91) lorsque ledit tuyau de grand diamètre (80) et ledit tuyau de petit diamètre (90) sont connectés ;
- une partie de support (15, 25, 35) conçue pour supporter ledit tuyau de petit diamètre (90) et qui est formée sur chaque pièce latérale (12) de manière à être orthogonale auxdites pièces latérales (12) et à être en face l'une de l'autre, et
- une pièce de connexion (11, 21) reliant lesdites pièces latérales (12) à une extrémité de chaque pièce latérale (12) et positionnée dans un plan dans lequel est disposée ladite partie de support (15, 25, 35), dans lequel lesdites pièces latérales (12), ladite pièce de connexion (11, 21) et ladite partie de support (15, 25, 35) sont formées d'un seul tenant,
**caractérisé par**
des rainures de guidage (19) qui font saillie vers l'extérieur et formées sur une partie d'extrémité de chaque pièce latérale (12) opposée à ladite partie d'extrémité desdites pièces latérales (12) qui est connectée à ladite pièce de connexion (11, 21)

2. Raccord de tuyauterie selon la revendication 1, **caractérisé en ce que** les parties de support (15, 25, 35) sont arquées le long d'une circonférence du tuyau de petit diamètre (90).

3. Raccord de tuyauterie selon la revendication 1, **caractérisé en ce que** la pièce de connexion (11) est formée dans une forme rectangulaire qui relie les parties d'extrémité des pièces latérales (12).

4. Raccord de tuyauterie selon la revendication 1, **caractérisé en ce que** la pièce de connexion (21) est formée dans une forme arquée qui relie des positions légèrement éloignées des parties d'extrémité des pièces latérales (12).

5. Raccord de tuyauterie selon la revendication 1, **caractérisé par** une partie courbe (17) formée dans une partie centrale de chaque pièce latérale (12) et adaptée pour être en contact avec une circonférence du tuyau de grand diamètre (80).

6. Raccord de tuyauterie selon la revendication 1, **caractérisé par** une partie pliée (18) formée sur une partie d'extrémité de chaque pièce latérale (12) opposée à la partie d'extrémité desdites pièces latérales (12) qui est connectée à ladite pièce de connexion (11, 21), et fait saillie vers l'extérieur.

7. Raccord de tuyauterie (10) pour connecter un tuyau de grand diamètre (80) et un tuyau de petit diamètre (90) ayant chacun une partie de bride (81, 91) à l'extrémité du tuyau, comprenant :
une paire de pièces latérales (12) disposées pour être en face l'une de l'autre et ayant chacune une partie de trou de raccord (13) pour recevoir lesdites parties de bride (81, 91) lorsque ledit tuyau de grand diamètre (80) et ledit tuyau de petit diamètre (90) sont connectés ;
une partie de support (15, 25, 35) conçue pour supporter ledit tuyau de petit diamètre (90) et qui est formée sur chaque pièce latérale (12) de manière à être orthogonale auxdites pièces latérales (12) et à être en face l'une de l'autre, et
une pièce de connexion (31) reliant lesdites pièces latérales (12) à une extrémité de chaque pièce latérale (12) et positionnée de manière orthogonale à un plan dans lequel est disposée ladite partie de support (15, 25, 35), dans lequel lesdites pièces latérales (12), ladite pièce de connexion (31) et ladite partie de support (15, 25, 35) sont formées d'un seul tenant,
**caractérisé par**
des rainures de guidage (19) qui font saillie vers l'extérieur et formées sur une partie d'extrémité de chaque pièce latérale (12) opposée à ladite partie d'extrémité desdites pièces latérales (12) qui est connectée à ladite pièce de connexion (31).

8. Raccord de tuyauterie selon la revendication 7, **caractérisé en ce que** les parties de support (15) sont arquées le long d'une circonférence du tuyau de petit diamètre (90).

9. Raccord de tuyauterie selon la revendication 7, **caractérisé par** une partie courbe (17) formée dans une partie centrale de chaque pièce latérale (12) et adaptée pour être en contact avec une circonférence du tuyau de grand diamètre (80).

10. Raccord de tuyauterie selon la revendication 7, **caractérisé par** une partie pliée (18) formée sur une partie d'extrémité de chaque pièce latérale (12) opposée à la partie d'extrémité desdites pièces latérales (12) qui est connectée à ladite pièce de connexion (31), et fait saillie vers l'extérieur.
